(19) 

Europäisches
Patentamt

European
Patent Office

Office européen
des brevets

(11) **EP 4 378 980 A1**

(12) **EUROPEAN PATENT APPLICATION**

published in accordance with Art. 153(4) EPC

(43) Date of publication:
**05.06.2024 Bulletin 2024/23**

(21) Application number: **23844350.1**

(22) Date of filing: **01.06.2023**

(51) International Patent Classification (IPC):
*C08J 3/24* (2006.01)    *C08J 3/075* (2006.01)
*C08F 222/10* (2006.01)    *C08F 220/06* (2006.01)

(86) International application number:
**PCT/KR2023/007523**

(87) International publication number:
**WO 2024/085336 (25.04.2024 Gazette 2024/17)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **21.10.2022 KR 20220136874**

(71) Applicant: **LG Chem, Ltd.**
**Yeoui-daero, Youngdungpo-gu
Seoul 07336 (KR)**

(72) Inventors:
• **YEO, Yong Ho**
  **Yuseong-gu Daejeon 34122 (KR)**
• **KIM, Jong Hun**
  **Yuseong-gu Daejeon 34122 (KR)**
• **KIM, Yong Jin**
  **Yuseong-gu Daejeon 34122 (KR)**

(74) Representative: **Goddar, Heinz J.**
**Boehmert & Boehmert
Anwaltspartnerschaft mbB
Pettenkoferstrasse 22
80336 München (DE)**

(54) **METHOD FOR PREPARING SUPERABSORBENT POLYMER**

(57)    The present invention provides a method for preparing a super absorbent polymer, including: feeding a composition containing a water-soluble ethylenically unsaturated monomer having an acidic group of which at least a part is neutralized, an internal crosslinking agent, and a polymerization initiator to a polymerization reactor and subjecting the composition to a polymerization reaction to obtain a hydrous gel polymer; drying the hydrous gel polymer to obtain a dried substance; hydrating the dried substance to adsorb moisture to the dried substance; and pulverizing the hydrated dried substance to obtain a super absorbent polymer.

【FIG. 1】

```
┌─────────────────────────────────┐
│   SUBJECTING COMPOSITION        │
│   TO POLYMERIZATION REACTION    │
│   TO OBTAIN HYDROUS GEL POLYMER │
└─────────────────────────────────┘
              │
              ▼
┌─────────────────────────────────┐
│   DRYING THE HYDROUS GEL POLYMER│
│   TO OBTAIN DRIED SUBSTANCE(a)  │
└─────────────────────────────────┘
              │
              ▼
┌─────────────────────────────────┐
│   HYDRATING THE DRIED SUBSTANCE(a)│
│   TO ADSORB MOISTURE            │
│   TO THE DRIED SUBSTANCE(a)     │
└─────────────────────────────────┘
              │
              ▼
┌─────────────────────────────────┐
│   PULVERIZING                   │
│   THE HYDRATED DRIED SUBSTANCE(b)│
└─────────────────────────────────┘
```

EP 4 378 980 A1

**Description**

[Technical Field]

CROSS-REFERENCE TO RELATED APPLICATION

The present application claims the benefit of priority to Korean Patent Application No. 10-2022-0136874, filed on October 21, 2022, the entire contents of which are incorporated herein by reference.

Technical Field

The present invention relates to a method for preparing a super absorbent polymer, and more particularly, to a method for preparing a super absorbent polymer in which the amount of fine particles generated is reduced through hydration.

[Background Art]

A super absorbent polymer (SAP) is a synthetic polymeric material capable of absorbing moisture in an amount of about 500 to 1,000 times its own weight. Various manufacturers have denominated it as different names, such as a super absorbency material (SAM) and an absorbent gel material (AGM). Since such super absorbent polymers started to be practically applied in sanitary products, now they have been widely used for a water-retaining agent for gardening, a water stop material for civil engineering and construction, a sheet for raising seedlings, a fresh-keeping agent in the food distribution field, a material for poultice, and the like, and have been mainly used for hygiene products such as diapers and sanitary pads.

Meanwhile, there has been a problem in that the amount of fine particles generated is increased due to destruction of a surface of a dried substance in a pulverization step of a series of steps for preparing a super absorbent polymer. As such, when the fine particles are generated during the pulverization process, a yield of the super absorbent polymer to be finally commercialized may decrease by the amount of fine particles generated. Furthermore, the fine particles may be inhaled into the respiratory tract of a worker performing the pulverization step, resulting in health problems.

Therefore, there is a need for a method capable of reducing the amount of fine particles generated when pulverization is performed in the pulverization step.

**[Disclosure]**

[Technical Problem]

In order to solve the problems mentioned in the background art, an object of the present invention is to provide a method for preparing a super absorbent polymer capable of reducing the amount of fine particles generated in a pulverization step.

[Technical Solution]

In one general aspect, a method for preparing a super absorbent polymer includes: feeding a composition containing a water-soluble ethylenically unsaturated monomer having an acidic group of which at least a part is neutralized, an internal crosslinking agent, and a polymerization initiator to a polymerization reactor and subjecting the composition to a polymerization reaction to obtain a hydrous gel polymer; drying the hydrous gel polymer to obtain a dried substance; hydrating the dried substance to adsorb moisture to the dried substance; and pulverizing the hydrated dried substance to obtain a super absorbent polymer.

[Advantageous Effects]

According to the method for preparing a super absorbent polymer of the present invention, the dried substance after drying is hydrated, such that moisture may be adsorbed to the dried substance. A moisture content of the surface of the dried substance may be increased by the hydration, and through this, a phenomenon in which the surface of the dried substance is destroyed during pulverization may be suppressed. Therefore, the amount of fine particles generated as the surface of the dried substance is destroyed in the pulverization step may be reduced. In addition, the amount of fine particles generated is reduced, such that a yield of a super absorbent polymer to be finally commercialized may be increased.

[Description of Drawings]

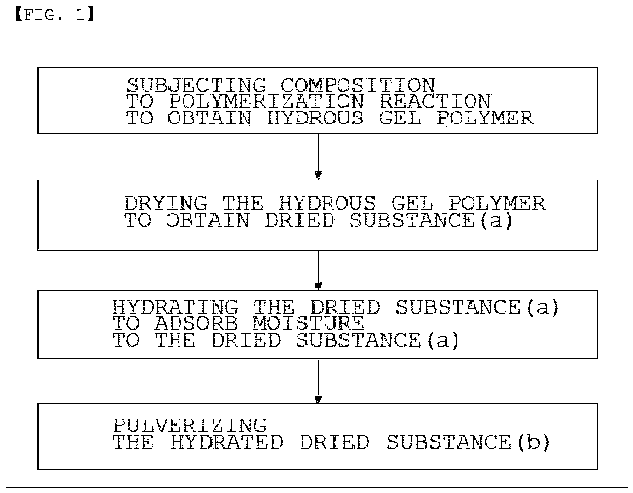

FIG. 1 is a flow chart illustrating a method for preparing a super absorbent polymer according to an exemplary embodiment of the present invention.

[Best Mode]

The terms and words used in the description and claims of the present invention are not to be construed limitedly as having general or dictionary meanings but are to be construed as having meanings and concepts meeting the technical ideas of the present invention, based on a principle that the inventors are able to appropriately define the concepts of terms in order to describe their own inventions in the best mode.

Hereinafter, the present invention will be described in more detail with reference to FIG. 1 in order to assist in the understanding of the present invention.

A method for preparing a super absorbent polymer according to an exemplary embodiment of the present invention may include: feeding a composition containing a water-soluble ethylenically unsaturated monomer having an acidic group of which at least a part is neutralized, an internal crosslinking agent, and a polymerization initiator to a polymerization reactor and subjecting the composition to a polymerization reaction to obtain a hydrous gel polymer; drying the hydrous gel polymer to obtain a dried substance (a); hydrating the dried substance (a) to adsorb moisture to the dried substance (a); and pulverizing the hydrated dried substance (b) to obtain a super absorbent polymer.

First, in the method for preparing a super absorbent polymer according to an exemplary embodiment of the present invention, a step of feeding a composition containing a water-soluble ethylenically unsaturated monomer having an acidic group of which at least a part is neutralized, an internal crosslinking agent, and a polymerization initiator to a polymerization reactor and subjecting the composition to a polymerization reaction to obtain a hydrous gel polymer may be performed. As described above, the composition may contain a water-soluble ethylenically unsaturated monomer, an internal crosslinking agent, and a polymerization initiator, and in addition, may additionally contain additives such as a thickener, a plasticizer, a storage stabilizer, and an antioxidant, if necessary.

In this case, the water-soluble ethylenically unsaturated monomer may be (meth) acrylic acid or a salt thereof. When an alkali metal salt having acrylic acid of which at least a part is neutralized, which is acrylic acid or a sodium salt thereof, is used as the water-soluble ethylenically unsaturated monomer, a super absorbent polymer having improved absorbency may be obtained.

In addition, as the water-soluble ethylenically unsaturated monomer, an anionic monomer such as maleic anhydride, fumaric acid, crotonic acid, itaconic acid, 2-acryloylethane sulfonic acid, 2-methacryloylethane sulfonic acid, 2-(meth)acryloylpropane sulfonic acid, or 2-(meth)acrylamide-2-methyl propane sulfonic acid, and a salt thereof; a nonionic hydrophilic monomer such as (meth)acrylamide, N-substituted (meth)acrylate, 2-hydroxyethyl(meth)acrylate, 2-hydroxypropyl(meth)acrylate, methoxy polyethylene glycol (meth)acrylate, or polyethylene glycol (meth)acrylate; and an amino group-containing unsaturated monomer such as (N,N)-dimethylaminoethyl(meth)acrylate or (N,N)-dimethylaminopropyl(meth)acrylamide, and a quaternary compound thereof may be used. The salt of the anionic monomer may be a metal salt, a divalent metal salt, an ammonium salt, or an organic amine salt.

The water-soluble ethylenically unsaturated monomer may have an acidic group of which at least a part is neutralized. The water-soluble ethylenically unsaturated monomer having an acidic group of which at least a part is neutralized may be prepared by neutralizing the acidic group of the water-soluble ethylenically unsaturated monomer using a neutralizing agent. In this case, as the neutralizing agent, a basic material capable of neutralizing an acidic group, such as sodium hydroxide (or caustic soda), potassium hydroxide, or ammonium hydroxide may be used.

Meanwhile, the internal crosslinking agent may serve to polymerize the water-soluble ethylenically unsaturated monomers described above by crosslinking unsaturated bonds thereof.

The internal crosslinking agent may be a (meth)acrylate-based compound in which a crosslinking reaction proceeds by a free-radical polymerization (FRP) reaction. Specifically, the internal crosslinking agent may be one or more compounds selected from the group consisting of ethylene glycol di(meth)acrylate, polyethylene glycol (meth)acrylate, polyethylene glycol di(meth)acrylate, propylene glycol di(meth)acrylate, polypropylene glycol (meth)acrylate, butanediol di(meth)acrylate, butylene glycol di(meth)acrylate, diethylene glycol di(meth)acrylate, hexanediol di(meth)acrylate, triethylene glycol di(meth)acrylate, tripropylene glycol di(meth)acrylate, and tetraethylene glycol di(meth)acrylate. More specifically, the internal crosslinking agent may be one or more of ethylene glycol di(meth)acrylate, polyethylene glycol (meth)acrylate, and polyethylene glycol di(meth)acrylate.

Meanwhile, in the composition, as the polymerization initiator, a thermal polymerization initiator or a photo-polymerization initiator by UV irradiation may be used according to a polymerization method. However, even when the polymerization is performed by the photo-polymerization method, a certain amount of heat may be generated by irradiation with ultraviolet rays, and a certain amount of heat is generated according to the progression of the polymerization reaction, which is an exothermic reaction, and therefore, a thermal polymerization initiator may be additionally included.

As the photo-polymerization initiator, a compound capable of forming a radical by light such as ultraviolet rays may be used. As the photo-polymerization initiator, one or more selected from the group consisting of benzoin ether, dialkyl acetophenone, hydroxyl alkylketone, phenyl glyoxylate, benzyl dimethyl ketal, acyl phosphine, and $\alpha$-aminoketone may be used. Meanwhile, specific examples of the acyl phosphine include diphenyl(2,4,6-trimethylbenzoyl)phosphine oxide, bis(2,4,6-trimethylbenzoyl)phenylphosphine oxide, and ethyl(2,4,6-trimethylbenzoyl)phenylphosphinate.

In addition, as the thermal polymerization initiator, one or more selected from the group consisting of a persulfate-based initiator, an azo-based initiator, hydrogen peroxide, and ascorbic acid may be used. Specifically, examples of the persulfate-based initiator include sodium persulfate ($Na_2S_2O_8$), potassium persulfate ($K_2S_2O_8$), and ammonium persulfate (($NH_4$)$_2S_2O_8$).

Specifically, the polymerization method is largely divided into thermal polymerization and photo-polymerization according to a polymerization energy source. The thermal polymerization may be performed in a polymerization reactor equipped with a stirring shaft, such as a kneader, and the photo-polymerization may be performed in a polymerization reactor equipped with a movable conveyor belt.

The hydrous gel polymer of the present invention may be prepared by the polymerization reaction that proceeds by feeding a composition containing a water-soluble ethylenically unsaturated monomer, an internal crosslinking agent, and a polymerization initiator to a polymerization reactor, and in this case, the amount of the internal crosslinking agent in the composition may be 0.01 to 5 parts by weight with respect to 100 parts by weight of the water-soluble ethylenically unsaturated monomer. For example, the amount of the internal crosslinking agent may be 0.01 parts by weight or more, 0.05 parts by weight or more, 0.1 parts by weight, or 0.2 parts by weight or more, and 5 parts by weight or less, 3 parts by weight or less, 2 parts by weight or less, 1 part by weight or less, or 0.5 parts by weight or less, with respect to 100 parts by weight of the water-soluble ethylenically unsaturated monomer. When the content of the internal crosslinking agent is excessively low, crosslinking does not occur sufficiently, which makes it difficult to realize an appropriate level or higher of strength, and when the content of the internal crosslinking agent is excessively high, an internal crosslinking density increases, which makes it difficult to realize a desired water retention capacity.

The composition of the present invention may be prepared in the form of a solution dissolved in a solvent. In this case, as a usable solvent, a solvent capable of dissolving the raw materials described above may be used. For example, as the solvent, water, ethanol, ethylene glycol, diethylene glycol, triethylene glycol, 1,4-butanediol, propylene glycol, ethylene glycol monobutyl ether, propylene glycol monomethyl ether, propylene glycol monomethyl ether acetate, methyl ethyl ketone, acetone, methyl amyl ketone, cyclohexanone, cyclopentanone, diethylene glycol monomethyl ether, diethylene glycol ethylether, toluene, xylene, butyrolactone, carbitol, methyl cellosolve acetate, N,N-dimethylacetamide, or a mixture thereof may be used.

Next, a step of drying, pulverizing, and classifying the hydrous gel polymer formed through the polymerization reaction of the composition may be followed. In this case, in order to increase the efficiency in drying the hydrous gel polymer, a coarse pulverization step may be additionally performed. As a pulverizer used in the coarse pulverization step, specifically, one selected from the group consisting of a vertical pulverizer, a turbo cutter, a turbo grinder, a rotary cutter mill, a cutter mill, a disc mill, a shred crusher, a crusher, a chopper, and a disc cutter may be used.

Meanwhile, the method for preparing a super absorbent polymer of the present invention will be described with reference to the flow chart of FIG. 1. The method for preparing a super absorbent polymer of the present invention may include drying the hydrous gel polymer that is coarse pulverized or is not subjected to the coarse pulverization step as described above to obtain a dried substance (a). The drying step may be performed by a drying method, specifically, by hot air supply, irradiation with infrared rays, irradiation with microwaves, or irradiation with ultraviolet rays, and the dried substance (a) may be obtained by performing the drying step according to the drying method described above.

In this case, a moisture content of the dried substance (a) may be 2 to 9 wt%. More specifically, the moisture content of the dried substance (a) may be 3 to 7 wt% or 4 to 6 wt%. In this case, the moisture content of the dried substance (a) may refer to a moisture content of the dried substance (a) that is subjected to the drying step but is not subjected to subsequent hydration. When the moisture content of the dried substance is less than 2 wt%, a content of fine particles in the dried substance may be excessively increased in a state where the dried substance is overdried. When the moisture content of the dried substance exceeds 9 wt%, the dried substance may be regarded as an undried substance, and when the dried substance is hydrated and then introduced into a subsequent pulverization step, pulverization may not be possible.

The method for preparing a super absorbent polymer according to an exemplary embodiment of the present invention may include hydrating the dried substance (a) to adsorb moisture to the dried substance (a). Specifically, a certain amount of moisture is adsorbed to a surface of the dried substance (a) by the hydration, and through this, a hydrated dried substance (b) may be obtained.

The hydration may be performed under a condition of 15°C to 70°C, and specifically, a condition of 20°C to 40°C. Through this, it is possible to maintain an appropriate amount of moisture on the surface of the dried substance (a), such that smooth hydration may be possible. Specifically, the hydration temperature may be a droplet temperature when the hydration is performed by spray hydration.

The hydration is performed under the conditions described above, and as a means capable of creating this atmosphere, for example, the hydration may be performed by directly spraying moisture. Moisture may be adsorbed to the surface of the dried substance (a) by such hydration. Moisture adsorbed to the surface of the hydrated dried substance (b) as described above may diffuse and be absorbed into the inside over time.

The amount of moisture adsorbed to the dried substance (a) by the hydration may be 1 wt% or more, 2 wt% or more, or 3 wt% or more, and 10 wt% or less, 7 wt% or less, or 5 wt% or less, with respect to 100 wt% of the dried substance (a). The amount of moisture adsorbed may refer to the amount of moisture adsorbed to the dried substance (a) by the hydration. When moisture is adsorbed to the dried substance (a) within the above range, a moisture content of the hydrated dried substance (b) may reach a desired level in the present invention. In this case, the amount of moisture adsorbed may be measured according to the International Organization for Standardization (ISO) 171904-4:2001 method.

Meanwhile, the moisture content of the hydrated dried substance (b) may be 5 wt% or more, 6 wt% or more, or 9 wt% or more, and 15 wt% or less, 13 wt% or less, or 11 wt% or less. In this case, the moisture content of the hydrated dried substance (b) may refer to a moisture content of the hydrated dried substance (b) that is subjected to the hydration but is not subjected to a subsequent pulverization step. When the moisture content of the hydrated dried substance (b) is within the above range, the amount of fine particles generated in a pulverization step described below may be reduced to, for example, a level of less than 20%. Therefore, the amount of moisture adsorbed to the dried substance (a) may be adjusted during hydration so that the moisture content of the hydrated dried substance (b) is controlled within the above range.

When the moisture content of the hydrated dried substance (b) is less than 5 wt%, it may be difficult to reduce the generation of fine particles during pulverization, which is targeted in the present invention. When the moisture content of the hydrated dried substance (b) exceeds 15 wt%, the moisture content of the hydrated dried substance (b) is excessively high, and thus, pulverization performed in the pulverization step may be impossible. In this case, the moisture content may be measured by a moisture meter (AND MX_50).

According to the preparation method according to an exemplary embodiment of the present invention, the preparation method may include pulverizing the hydrated dried substance (b) to obtain a super absorbent polymer. The pulverization step may be performed one time, but may be performed, for example, one or more times. When the dried substance that is not hydrated is pulverized as in the related art, fine particles are excessively generated because the surface of the dried substance is destroyed. In general, the fine particle has a particle size (D50) of less than 150 um, and may be inappropriate for commercialization as a super absorbent polymer. In this case, the particle size (D50) may refer to a particle size at a point of 50% in a cumulative distribution of the number of particles according to the particle size. Therefore, as the amount of fine particles generated in the pulverization step increases, the yield of the super absorbent polymer may decrease. However, in the present invention, hydration is performed before the pulverization step, such that moisture may be adsorbed to the surface of the dried substance (a) and destruction of the surface of the hydrated dried substance (b) may be suppressed due to the moisture. Through this, the amount of fine particles generated during pulverization may be reduced, and the yield of the super absorbent polymer may be increased.

Meanwhile, as a pulverizer used in the pulverization step, specifically, a ball mill, a pin mill, a hammer mill, a screw mill, a roll mill, a disc mill, or a jog mill may be used.

According to an exemplary embodiment of the present invention, the pulverizing of the hydrated dried substance (b) to obtain the super absorbent polymer may be performed immediately after the hydration of the dried substance (a) to within 24 hours after the hydration. Immediately after the hydration may mean immediately after the hydration is completed or a minimum time required for the pulverization step after the hydration. As such, the content of moisture on the surface of the hydrated dried substance (b) immediately after the hydration may be higher, and through this, when the pulverization step is performed immediately after the hydration, the surface of the hydrated dried substance (b) is prevented from being destroyed, and thus, a desired result may be obtained. Therefore, when the amount of moisture adsorbed during the hydration is relatively small, even though the amount of moisture adsorbed is, for example, 1 wt% to 3 wt%, in a case where the pulverization step is performed immediately after the hydration, the moisture does not diffuse from the surface of the hydrated dried substance (b) to the inside, and therefore, the amount of fine particles generated during pulverization may be reduced.

Meanwhile, moisture present on the surface of the hydrated dried substance (b) may diffuse into the inside as time elapses after the hydration. However, when the amount of moisture adsorbed to the dried substance (a) during the hydration is, for example, 4 wt% to 10 wt%, which is relatively high, even when the hydrated dried substance (b) is stabilized for a certain period of time, the amount of moisture remaining on the surface of the hydrated dried substance (b) may be maintained high. Therefore, when the pulverization step is performed after the stabilization process, the destruction of the surface of the hydrated dried substance (b) is prevented, such that the amount of fine particles generated may be reduced. In this case, the stabilization may mean, for example, aging the hydrated dried substance (b) for a certain period of time in a humid atmosphere in an airtight container.

Meanwhile, in order to manage the physical properties of the super absorbent polymer to be finally commercialized after the pulverization step, the hydrated dried substance (b) may be subjected to an additional classification process according to an appropriate particle size. Furthermore, the classification may be performed after each pulverization.

In this case, the appropriate particle size (D50) may be a particle size of 150 um to 850 um, and particles having such a particle size may be classified as normal particles. On the other hand, particles having a particle size of less than 150 um as described above may be classified as fine particles. Such a particle size may be measured according to European Disposables and Nonwovens Association (EDANA) standard EDANA WSP 220.3 method.

Through a series of pulverization steps, normal particles, that is, a super absorbent polymer, may be prepared.

Thereafter, the preparation method may further include crosslinking a surface of the prepared super absorbent polymer in the presence of a surface crosslinking agent to prepare a super absorbent polymer having a surface on which a crosslinked layer is at least partially formed. In this case, the surface crosslinked layer may be produced from a surface crosslinking agent, the surface crosslinking agent may include a polyhydric epoxy compound, and the polyhydric epoxy compound may be a glycidyl ether compound of a polyhydric alcohol.

Specifically, the surface crosslinking agent may include one or more polyhydric epoxy compounds selected from the group consisting of ethyleneglycol diglycidyl ether, diethyleneglycol diglycidyl ether, triethyleneglycol diglycidyl ether, tetraethyleneglycol diglycidyl ether, glycerin polyglycidyl ether, and sorbitol polyglycidyl ether.

The surface crosslinking agent may be mixed with the super absorbent polymer in a solution state, specifically, in a surface crosslinking solution state dissolved in a solvent. The surface crosslinking solution may include water and methanol in addition to the surface crosslinking agent. In general, the surface crosslinking solution is applied to the surface of the super absorbent polymer. Therefore, a surface crosslinking reaction occurs on the surface of the super absorbent polymer, which improves crosslinkability on the surface of the particle without substantially affecting the inside of the particle. Accordingly, the surface crosslinked super absorbent polymer has a higher degree of crosslinking near the surface than the inside. The surface crosslinking reaction and drying may be simultaneously performed by heating the super absorbent polymer to which the surface crosslinking agent is added.

Hereinafter, the present invention will be described in more detail by Examples. However, the following Examples are provided for illustrating the present invention. It is apparent to those skilled in the art that various modifications and alterations may be made without departing from the scope and spirit of the present invention, and the scope of the present invention is not limited thereto.

**Examples**

**Example 1**

In a 3 L glass vessel equipped with a stirrer and a thermometer, 100 g of acrylic acid, 0.16 g of polyethylene glycol diacrylate (PEGDA) as an internal crosslinking agent, 0.008 g of diphenyl(2,4,6-trimethylbenzoyl)phosphine oxide as a photo-polymerization initiator, a polymerization initiator, 0.12 g of sodium persulfate as a thermal polymerization initiator, and 123.5 g of a caustic soda (NaOH) solution as a neutralizing agent were mixed at room temperature so that a solid content was 45.0 wt%, thereby preparing a composition.

Thereafter, the composition was fed at a speed of 500 to 2,000 mL/min onto a conveyor belt on which a belt having a width of 10 cm and a length of 2 m moved at a speed of 10 cm/min. At this time, a polymerization reaction was allowed to proceed for 60 seconds by irradiation with ultraviolet rays with an intensity of 10 mW/cm$^2$ while feeding the monomer composition, thereby obtaining a hydrous gel polymer.

Next, the hydrous gel polymer was coarse pulverized using a chopper. Thereafter, the pulverized hydrous gel polymer was dried in hot air at 185°C for 30 minutes using an air-flow oven. Through this, 100 g of a dried substance having a moisture content of 5 wt% was obtained.

The dried substance was evenly spread on a SUS tray having a size of 320 mm □× 200 mm □× 50 mm and then hydrated by spraying 3.2 g of moisture. The amount of moisture adsorbed to the dried substance was 3 wt% with respect to 100 wt% of the dried substance, and the amount of moisture adsorbed was measured according to the International Organization for Standardization (ISO) 17190-4:2001 method. The moisture content of the dried substance hydrated by spray hydration was 8 wt%. Subsequently, the hydrated dried substance was put into an airtight container and then shaken for mixing. Thereafter, the hydrated dried substance was stabilized in the airtight container for 24 hours.

As such, after the hydrated dried substance was stabilized in the airtight container, the hydrated dried substance was pulverized with a roll mill to obtain a pulverized product. The pulverized product was put into a mesh set obtained by combining ASTM standard meshes #6, #10, #20, #25, #30, #40, #50, #70, #80, and #100, and the mesh set was mounted on a sieve shaker. The sieve shaker was operated at an amplitude of 1.5 mm for 10 minutes to classify the pulverized product. Therefore, a super absorbent polymer having a particle size of 150 $\mu$m to 850 $\mu$m was obtained.

### Example 2

A super absorbent polymer was prepared in the same manner as that of Example 1, except that the dried substance was hydrated by spraying 5.8 g of moisture (the amount of moisture adsorbed was 5 wt% with respect to 100 wt% of the dried substance), and the moisture content of the hydrated dried substance was 10 wt%.

### Example 3

A super absorbent polymer was prepared in the same manner as that of Example 1, except that the dried substance was hydrated by spraying 11 g of moisture (the amount of moisture adsorbed was 10 wt% with respect to 100 wt% of the dried substance), and the moisture content of the hydrated dried substance was 15 wt%.

### Example 4

A super absorbent polymer was prepared in the same manner as that of Example 1, except that the dried substance was hydrated by spraying 1.1 g of moisture (the amount of moisture adsorbed was 1 wt% with respect to 100 wt% of the dried substance), the moisture content of the hydrated dried substance was 6 wt%, and pulverization was performed immediately after the hydration without a stabilization process of the hydrated dried substance.

### Example 5

A super absorbent polymer was prepared in the same manner as that of Example 1, except that the dried substance was hydrated by spraying 1.1 g of moisture (the amount of moisture adsorbed was 1 wt% with respect to 100 wt% of the dried substance), the moisture content of the hydrated dried substance was 6 wt%, and a stabilization process of the hydrated dried substance was performed for 1 hour.

### Example 6

A super absorbent polymer was prepared in the same manner as that of Example 1, except that the dried substance having a moisture content of 2 wt% was hydrated by spraying 3.2 g of moisture (the amount of moisture adsorbed was 3 wt% with respect to 100 wt% of the dried substance), the moisture content of the hydrated dried substance was 5 wt%, and pulverization was performed immediately after the hydration without a stabilization process of the hydrated dried substance.

### Example 7

A super absorbent polymer was prepared in the same manner as that of Example 1, except that the dried substance was hydrated by spraying 18 g of moisture (the amount of moisture adsorbed was 15 wt% with respect to 100 wt% of the dried substance), and the moisture content of the hydrated dried substance was 20 wt%.

### Example 8

A super absorbent polymer was prepared in the same manner as that of Example 1, except that the dried substance was hydrated by spraying 26 g of moisture (the amount of moisture adsorbed was 20 wt% with respect to 100 wt% of the dried substance), and the moisture content of the hydrated dried substance was 25 wt%.

### Comparative Examples

### Comparative Example 1

A super absorbent polymer was prepared in the same manner as that of Example 1, except that the dried substance was directly pulverized without hydration.

### Comparative Example 2

A super absorbent polymer was prepared in the same manner as that of Example 1, except that the dried substance having a moisture content of 2 wt% was directly pulverized without hydration.

**Comparative Example 3**

A super absorbent polymer was prepared in the same manner as that of Example 1, except that the dried substance having a moisture content of 10 wt% was directly pulverized without hydration.

**Experimental Examples**

The super absorbent polymers prepared in Examples and Comparative Examples were measured by the following methods. The measurement results are shown in Table 1.

1) Moisture Content

The moisture content may refer to a moisture content of the hydrated dried substance after hydration and before pulverization when hydration is performed (Examples), and may refer to a moisture content of the dried substance after drying and before pulverization when hydration is not performed (Comparative Examples). Specifically, the moisture content was measured through a change in weight caused by evaporating moisture by heating the hydrated dried substance or the dried substance with a halogen lamp (400 W) in a moisture meter (AND MX_50). Specifically, the moisture content was measured according to the following procedure.

① The measurement conditions of the moisture meter (heating temperature: 180°C, heating time: 40 minutes) were set.
② The weight was set to zero (0) in a state where no sample was present on a sample pan.
③ 5 g (error: 0.02%) of a sample of the hydrated dried substance or the dried substance was sampled and evenly loaded on the sample pan.
④ After the measurement was completed, a moisture content was confirmed.

2) Amount of Fine Particles Generated

The amount of fine particles generated may refer to the amount of particles including fine particles having a particle size of less than 150 um in a pulverized product pulverized through a pulverization step. Specifically, the amount of fine particle generated was measured by the following method.
First, 100 g of a sample of the pulverized product pulverized in Examples and Comparative Example was sampled, and the sample was put into a mesh set obtained by combining ASTM standard meshes #6, #10, #20, #25, #30, #40, #50, #70, and #100. The mesh set was mounted on a sieve shaker, and the sieve shaker was operated at an amplitude of 1.5 for 10 minutes, thereby classifying the pulverized product by particle size according to each mesh. Subsequently, a mesh ratio corresponding to each mesh was calculated according to the following Equation 1.

[Equation 1]

$$\text{Mesh ratio (wt\%)} = \frac{\text{Weight of pulverized product classified by mesh}}{\text{Total weight of pulverized product}} \times 100$$

Next, the amount of fine particles generated was measured by adding the mesh ratio of the pulverized product corresponding to less than #100 (particle size of less than 150 $\mu$m).

3) Particle Size

The particle size was measured by measuring a particle size of the pulverized product, and was calculated according to the following Equation 2 by classifying the pulverized product (100 g) with a mesh set in the same manner as the method of measuring "Amount of Fine Particles Generated" described above.

[Equation 2]

$$\text{Particle size (μm)} = \frac{\text{Average particle size of respective meshes (\#40 to 100) x Ratios of respective meshes (\#40 to 100)}}{\text{Total ratio of respective meshes (\#40 to 100)}}$$

At this time, the respective meshes (#40 to 100) are the respective meshes from #40 to #100 included in the mesh set, and the mesh ratio is the mesh ratio according to Equation 1 described above. That is, the particle size is a value obtained by calculating the arithmetic average of the average particle size based on the mesh ratios of meshes #40 to #100.

[Table 1]

|  | Amount of moisture adsorbed[1] (wt%) | Stabilization time[2] (h) | Moisture content (wt%) | Particle size (um) | Amount of fine particles generated (wt%) |
|---|---|---|---|---|---|
| Example 1 | 3 | 24 | 8 | 383.9 | 17.9 |
| Example 2 | 5 | 24 | 10 | 387.6 | 16.5 |
| Example 3 | 10 | 24 | 15 | 393.4 | 14.1 |
| Example 4 | 1 | 0 | 6 | 391.9 | 15.8 |
| Example 5 | 1 | 1 | 6 | 386.0 | 17.3 |
| Example 6 | 3 | 0 | 5 | 387.5 | 18.6 |
| Example 7 | 15 | 24 | 20 | cannot be pulverized | - |
| Example 8 | 20 | 24 | 25 | cannot be pulverized | - |
| Comparative Example 1 | Comparative- | - | 5 | 394.4 | 20.5 |
| Comparative Example 2 | Comparative- | - | 2 | 387.9 | 25.4 |
| Comparative Example 3 | Comparative- | - | 10 | cannot be pulverized | - |
| 1) The amount of moisture adsorbed represents the amount of moisture adsorbed to the dried substance during hydration. 2) The stabilization time refers to a certain time when the hydrated dried substance is put into the airtight container and then aged for the certain time. | | | | | |

Referring to Table 1, it could be confirmed that in the cases of Examples in which hydration was performed by adsorbing moisture to the dried substance and then the pulverization step was performed, moisture was adsorbed to the surface of the dried substance by the hydration, and thus, the amount of fine particles generated due to destruction of the surface caused in the pulverization step was reduced. In addition, it could be confirmed that, compared to Comparative Example 1 in which the hydration step was not performed on the dried substance having a moisture content of 5 wt%, in Examples 1 to 5 in which the hydration was performed on the dried substance having the same moisture content, the amount of fine particles generated was small.

However, in the cases of Examples 7 and 8 in which a large amount of moisture was adsorbed during the hydration, and the moisture content of the hydrated dried substance to be obtained in the present invention was excessively increased, it could be confirmed that pulverization was impossible in the pulverization step.

Meanwhile, in Comparative Example 1 in which the super absorbent polymer was prepared by pulverizing the dried substance having a moisture content of 5 wt%, which was not subjected to a hydration step, it could be confirmed that the amount of fine particles generated was significantly increased compared to Examples 1 to 5. In Examples 1 and 5, the dried substance having the same moisture content as in Comparative Example 1 was hydrated and pulverized, but in Comparative Example 1, the dried substance was not hydrated and was subjected to the pulverization step, and thus, it could be confirmed that the surface of the dried substance was destroyed, resulting in an increase in the amount of fine particles generated.

In addition, in Comparative Example 2 in which the super absorbent polymer was prepared by pulverizing the dried substance having a moisture content of 2 wt%, which was not subjected to a hydration step, it could be confirmed that the amount of fine particles generated was significantly increased compared to Example 6 in which the dried substance having the same moisture content was hydrated. As described above, it could be confirmed that the amount of fine particles generated was improved depending on whether or not the hydration step was performed on the dried substance having the same moisture content.

Meanwhile, in Comparative Example 3 in which the hydration step was not performed, and the dried substance having a moisture content of 10 wt% was pulverized, it could be confirmed that pulverization was impossible. As such, when the moisture content of the dried substance was high, the hydrous gel polymer could be in an undried state in the drying step, and when the hydrous gel polymer in the undried state was introduced into the pulverization step, the hydrous gel polymer was not pulverized as in Comparative Example 3.

**Claims**

1. A method for preparing a super absorbent polymer, comprising:

    feeding a composition containing a water-soluble ethylenically unsaturated monomer having an acidic group of which at least a part is neutralized, an internal crosslinking agent, and a polymerization initiator to a polymerization reactor and subjecting the composition to a polymerization reaction to obtain a hydrous gel polymer;
    drying the hydrous gel polymer to obtain a dried substance;
    hydrating the dried substance to adsorb moisture to the dried substance; and
    pulverizing the hydrated dried substance to obtain the super absorbent polymer.

2. The method of claim 1, further comprising, before the drying of the hydrous gel polymer, coarse pulverizing the hydrous gel polymer.

3. The method of claim 1, wherein the pulverizing of the hydrated dried substance to obtain the super absorbent polymer is performed immediately after the hydration of the dried substance to within 24 hours after the hydration.

4. The method of claim 1, wherein an amount of moisture adsorbed to the dried substance by the hydration is from 1 wt% to 10 wt% with respect to 100 wt% of the dried substance.

5. The method of claim 1, wherein the hydration is performed by spraying moisture onto the dried substance.

6. The method of claim 1, wherein the hydration is performed under a condition of from 15°C to 70°C.

7. The method of claim 1, wherein a moisture content of the hydrated dried substance is from 5 wt% to 15 wt%.

8. The method of claim 1, further comprising, after the pulverizing of the hydrated dried substance to obtain the super absorbent polymer, crosslinking a surface of the super absorbent polymer in the presence of a surface crosslinking agent to form a surface crosslinked layer on at least a portion of the surface of the super absorbent polymer.

9. The method of claim 1, wherein the internal crosslinking agent is one or more of ethylene glycol di(meth)acrylate, polyethylene glycol (meth)acrylate, and polyethylene glycol di(meth)acrylate.

10. The method of claim 1, wherein the water-soluble ethylenically unsaturated monomer is (meth)acrylic acid or a salt thereof.

【FIG. 1】

```
┌─────────────────────────────────────────────┐
│        SUBJECTING COMPOSITION                │
│     TO POLYMERIZATION REACTION               │
│     TO OBTAIN HYDROUS GEL POLYMER            │
└─────────────────────────────────────────────┘
                      │
                      ▼
┌─────────────────────────────────────────────┐
│     DRYING THE HYDROUS GEL POLYMER          │
│       TO OBTAIN DRIED SUBSTANCE(a)          │
└─────────────────────────────────────────────┘
                      │
                      ▼
┌─────────────────────────────────────────────┐
│   HYDRATING THE DRIED SUBSTANCE(a)          │
│   TO ADSORB MOISTURE                         │
│   TO THE DRIED SUBSTANCE(a)                 │
└─────────────────────────────────────────────┘
                      │
                      ▼
┌─────────────────────────────────────────────┐
│     PULVERIZING                              │
│   THE HYDRATED DRIED SUBSTANCE(b)           │
└─────────────────────────────────────────────┘
```

**INTERNATIONAL SEARCH REPORT**

| International application No. |
|---|
| **PCT/KR2023/007523** |

### A. CLASSIFICATION OF SUBJECT MATTER

**C08J 3/24**(2006.01)i; **C08J 3/075**(2006.01)i; **C08F 222/10**(2006.01)i; **C08F 220/06**(2006.01)i

According to International Patent Classification (IPC) or to both national classification and IPC

### B. FIELDS SEARCHED

Minimum documentation searched (classification system followed by classification symbols)

C08J 3/24(2006.01); B01J 20/26(2006.01); B01J 20/32(2006.01); B29B 9/02(2006.01); C07D 303/36(2006.01); C08K 3/013(2018.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 고흡수성 수지(super absorbent polymer), 함수겔(hydrogel), 가교제(crosslinking agent), 아크릴산(acrylic acid)

### C. DOCUMENTS CONSIDERED TO BE RELEVANT

| Category* | Citation of document, with indication, where appropriate, of the relevant passages | Relevant to claim No. |
|---|---|---|
| X | KR 10-2018-0003815 A (HANWHA CHEMICAL CORPORATION) 10 January 2018 (2018-01-10)<br>See paragraphs [0037]-[0038], [0049], [0077]-[0086] and [0119]-[0141]. | 1-10 |
| A | US 2021-0387162 A1 (LG CHEM., LTD.) 16 December 2021 (2021-12-16)<br>See entire document. | 1-10 |
| A | KR 10-2020-0091190 A (KOREA ADVANCED INSTITUTE OF SCIENCE AND TECHNOLOGY) 30 July 2020 (2020-07-30)<br>See entire document. | 1-10 |
| A | KR 10-2021-0141191 A (KOREA INSTITUTE OF INDUSTRIAL TECHNOLOGY) 23 November 2021 (2021-11-23)<br>See entire document. | 1-10 |
| A | US 2013-0172180 A1 (EVONIK STOCKHAUSEN, LLC) 04 July 2013 (2013-07-04)<br>See entire document. | 1-10 |

☐ Further documents are listed in the continuation of Box C.    ☑ See patent family annex.

| | |
|---|---|
| \* Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **08 September 2023** | **08 September 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

<table>
<tr><td colspan="2" align="center">**INTERNATIONAL SEARCH REPORT**<br>**Information on patent family members**</td><td colspan="2">International application No.<br>**PCT/KR2023/007523**</td></tr>
</table>

| Patent document<br>cited in search report | Publication date<br>(day/month/year) | Patent family member(s) | Publication date<br>(day/month/year) |
|---|---|---|---|
| KR 10-2018-0003815 A | 10 January 2018 | None | |
| US 2021-0387162 A1 | 16 December 2021 | BR 112021007447 A2 | 03 May 2022 |
| | | CN 112888717 A | 01 June 2021 |
| | | CN 112888717 B | 07 March 2023 |
| | | EP 3842485 A1 | 30 June 2021 |
| | | EP 3842485 A4 | 12 January 2022 |
| | | EP 3842485 B1 | 29 June 2022 |
| | | JP 2022-505023 A | 14 January 2022 |
| | | JP 7139014 B2 | 20 September 2022 |
| | | KR 10-2021-0038299 A | 07 April 2021 |
| KR 10-2020-0091190 A | 30 July 2020 | None | |
| KR 10-2021-0141191 A | 23 November 2021 | KR 10-2447886 B1 | 28 September 2022 |
| US 2013-0172180 A1 | 04 July 2013 | BR 112014016283 A2 | 13 June 2017 |
| | | CN 104024291 A | 03 September 2014 |
| | | EP 2797972 A1 | 05 November 2014 |
| | | EP 2797972 B1 | 21 September 2016 |
| | | JP 2015-503645 A | 02 February 2015 |
| | | KR 10-1686309 B1 | 13 December 2016 |
| | | KR 10-2014-0107491 A | 04 September 2014 |
| | | TW 201325637 A | 01 July 2013 |
| | | US 8420567 B1 | 16 April 2013 |
| | | US 8476189 B1 | 02 July 2013 |
| | | WO 2013-098045 A1 | 04 July 2013 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020220136874